# EUROPEAN PATENT SPECIFICATION

(11) **EP 1 043 526 B1**
(45) Date of publication and mention of the grant of the patent: **05.11.2003**
(21) Application number: 00660052.2
(22) Date of filing: 13.03.2000
(51) Int. Cl.: F16K 5/06

(54) **Ball seal for ball valve**
Dichtung für einen Kugelhahn
Joint d'étanchéité pour un robinet à tournant sphérique

(30) Priority: 07.04.1999 FI 990762; 04.05.1999 FI 991016
(43) Date of publication of application: 11.10.2000
(73) Proprietor: SENTO OY, 24101 Salo (FI)
(72) Inventor: Sirviö, Reijo Antero, 33500 Tampere (FI)
(74) Representative: Laako, Tero Jussi

(56) References cited:
- DE-A- 2 444 716
- GB-A- 1 486 934
- US-A- 3 460 803
- US-A- 4 502 663
- US-A- 4 750 708

## Description

The invention relates to a ball valve with a dual seal comprising a valve chamber, a valve ball turnable therein and an inlet and outlet channel for a fluid, said valve chamber being closed by welds; in the valve ball, a flow passage channel for the fluid; in between the valve chamber and the valve ball, around the inlet and/or outlet channel, supported against the valve chamber counterparts, a dual ball seal comprising a first ring made of some elastic material and located externally or on the side of the inlet/outlet channel, and a metallic second ring with a mainly V-shaped cross-section, located internally with respect to the first ring, or respectively on the side of the valve ball.

In ball valves, there are used two annular ball seals that are supported on one hand against the surface of the turnable valve ball performing the closing and respectively the opening function of the valve, said ball being generally turnable for the length of a quarter circle, and on the other hand against solid counterparts located on the circumference of the valve flow channels and being stationary with respect to the valve housing. Traditionally a ball seal is formed of one annular piece made of some flexible material, the external cylindrical surface and planar bottom surface of said piece being supported against the counterpart, and the conical top surface against the valve ball. This type of a seal structure was to some extent feasible when valves were assembled with threadings or bolts with the pressure directed at right angles to the plane of the seal. In that case a suitable pressure can be achieved in the seal, so that it does not leak, but only a moderate force is needed for closing or opening the valve. This, however, requires a lot of elements and additional working steps. Another problem has been that the valve leaks out. Ball valves are currently closed by welds after the valve has been assembled, so that they do not under any circumstances allow leakage to outside the valve, and they cannot be reopened. In a valve that has been assembled by welding, said welding causes, owing to welding shrinkage, excessive tightness of the valve ball, sometimes even complete immovability. Such valves are useless. Moreover, in valves of this type, problems arise from the leaking of the ball seal in between the seal and the valve chamber. In this case, however, the ball seals must during assembly be in contact both with the valve ball and the counterparts of the valve chamber, because only in this way the separate elements are mutually set at exactly known positions. If a clearance were left on either side of the sealings during the assembly, this would, among others, result in that after closing the valve chamber, the seal would most probably he loose and thus leak from the inlet channel to the outlet channel, i.e. the situation would be unacceptably out of control.

In the patent publication FI-61239, there is described an annular ball seal designed for high-temperature valves assembled by welding, said ball seal being made of a molybdenum-coated heat-resistant material, such as stellite, which should in these conditions be considered as a fully rigid material. Owing to the rigidity of the ball seal, and in order to achieve a suitable pressure between the seal and the valve ball, a spring is used in the structure in between the seal and the valve chamber, the force of said spring being effective in perpendicular direction to the plane of the seal. The publication does not mention welding shrinkage, but. said spring may partly compensate the effects thereof. However, irrespective of this a problem of the structure is the rear tightness of the ball seal, i.e. the space between the ball seal and the valve chamber, because the rear tightness is achieved by means of a separate soft rear seal which is difficult to make tight at alternating temperatures. Moreover, when in use the forces directed to the rear seal and the motion allowed by the spring in the flowing direction wear the seal off, which results in the leaking of the valve. That surface of the seal that faces the valve ball is attempted to be designed in the same shape as the valve ball, so that a surface contact should be achieved between the seal and the valve ball, which is a very problematic and expensive solution. Said structure also is very complex with its numerous elements and therefore uneconomical.

The patent US-4 147 327 describes a dual ball seal comprising only one or two metal rings, where one of said rings can be made of some softer and more flexible metal. The patents US-3 460 803 and US-3 843 091 describe dual ball seal arrangements consisting of a metal ring and a plastic ring. All of these seals, as well as the seal described in the document FI-61239, are designed for valves to be used at high pressures and/or high temperatures. All of them are assembled either by bolts or by threadings, wherefore the effects of welding shrinkage are not mentioned in the specifications. In all of said seals, a metallic and more rigid part of the dual ball seal constitutes the support ring of the valve ball, against which the valve ball is supported under high pressure, and the more flexible part of the dual ball seal constitutes the portion creating the sealing proper. For instance in the publication US-3 460 803 there is described first of all a dual ball seal where both branches of an internal metallic support ring are supported against the valve ball, and an external, more flexible sealing proper fills the space between the support ring and the valve chamber, where it effectively prevents any elastic motion otherwise performed by the support ring. Secondly said publication describes a dual ball seal where the only branch of an external, metallic support ring is supported, at the side located further away from the valve ball, against the stationary part of the valve ball, and an internal, more flexible sealing proper is supported, at all outer surfaces, against the valve chamber. If this type of seal arrangements were attempted to be applied in a ball valve assembled by welding, welding shrinkage would result in that the valve ball would already at this stage be directly supported against said rigid support rings located at opposite sides of the valve ball, in which case the valve ball would be left tightly in between said rings. Because the support rings are not designed to be flexible but expressly rigid, the result is an excessively large operating torque for the turning of the valve ball, and in the worst case the valve can be stuck altogether. In some embodiments described in the publications US-3 460 803 and US-3 843 091, the more flexible part of the seal is designed to turn fully plastic at the operating temperature and even flow out altogether. This type of phenomenon results in an extremely poor rear tightness of the seal.

Hence the object of the present invention is to provide a ball seal suited to be used in ball seals assembled by welding, said ball seal enabling the assembly of the valve prior to the welding in a controlled fashion, i.e. it allows the separate parts to get into mutual contact, and at the same time said ball seal provides, after the assembly welding, a valve ball seal that does not tend to result in an excessive tightness of the valve ball. The latter means that it should be always possible to turn the valve ball, and moreover the operating torque should be suitable in volume. Another object of the invention is a ball seal of the described type, with a good sealing capacity with respect to the valve ball, i.e. a good rear tightness, which remains good also in operation.

The above described drawbacks are eliminated and the objectives realized by means of a dual ball seal according to the invention, which is characterized by what is set forth in the characterizing part of the appended claim 1.

An advantage of the invention is, first of all, that the assembly of the valve elements is explicit and exact, and that after closing the valve chamber by welding, the ball seal of the valve still enables the closing and opening of the valve, i.e. the turning of the valve ball with a moderate force, and at the same time the ball seal effectively seals both the space between the sealing ring and the valve ball, and the space between the sealing ring and the valve chamber. Another advantage of the invention is that the aforementioned advantages are achieved in an extremely secure and reliable fashion, and that the ball seal maintains its good features extremely long during the operation. This means, among others, that the manufacturing process produces extremely few, if any, products that are defective with respect to the closing/opening force and tightness, and that the working life of the valve is long. A third advantage of the invention is that the structure of the invention is suited to prior art sealing seats that are already in production, in which case the structure remains simple, and different end products can be made of the same parts. An additional advantage is that the assembly work is easy and quick, when the sealing elements can be assembled in place as a "packet". Moreover, the making of the dual ball seal according to the invention is remarkably cheaper than the making of the known, massive machined sealing elements.

The invention is explained in more detail below, with reference to the appended drawings.

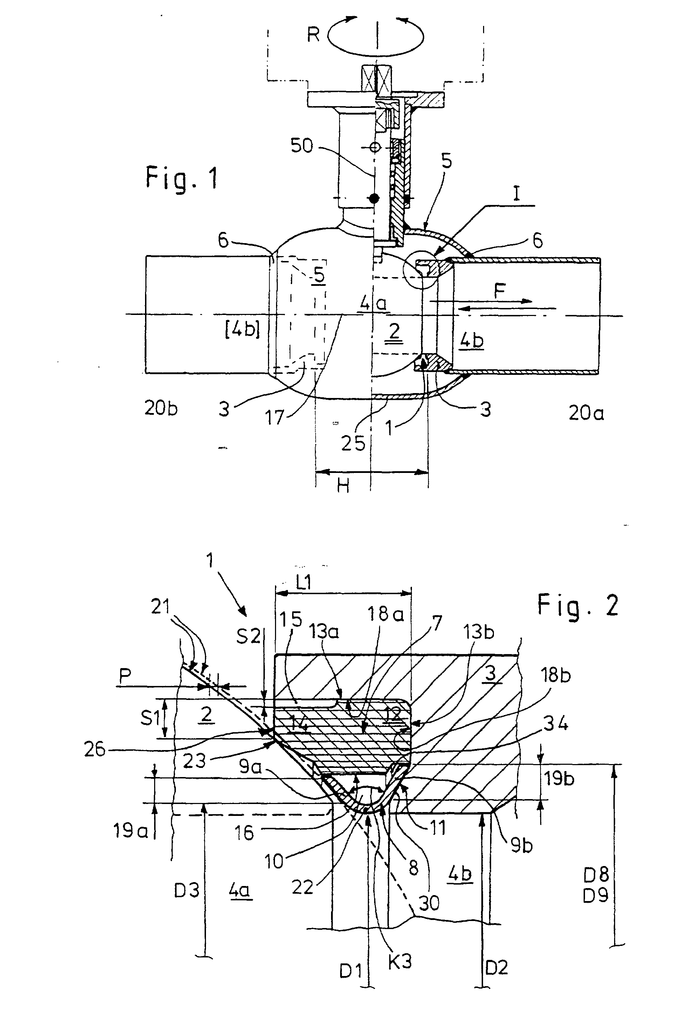

**Figure 1** shows a ball valve assembled by welding in a general side-view illustration, seen partly from outside and partly as a cross-section along a plane that passes via the central lines of the valve ball and the flow channels as well as of the valve stem.
**Figure 2** is a detailed illustration of a first preferred embodiment of the ball seal according to the invention, in a larger scale but in similar view as at point I of figure 1. The valve ball, after the assembly of the valve, in its open position prior to the assembly welding, is marked with a continuous line, and the valve ball after the assembly welding in its closed position is marked with a dotted line.

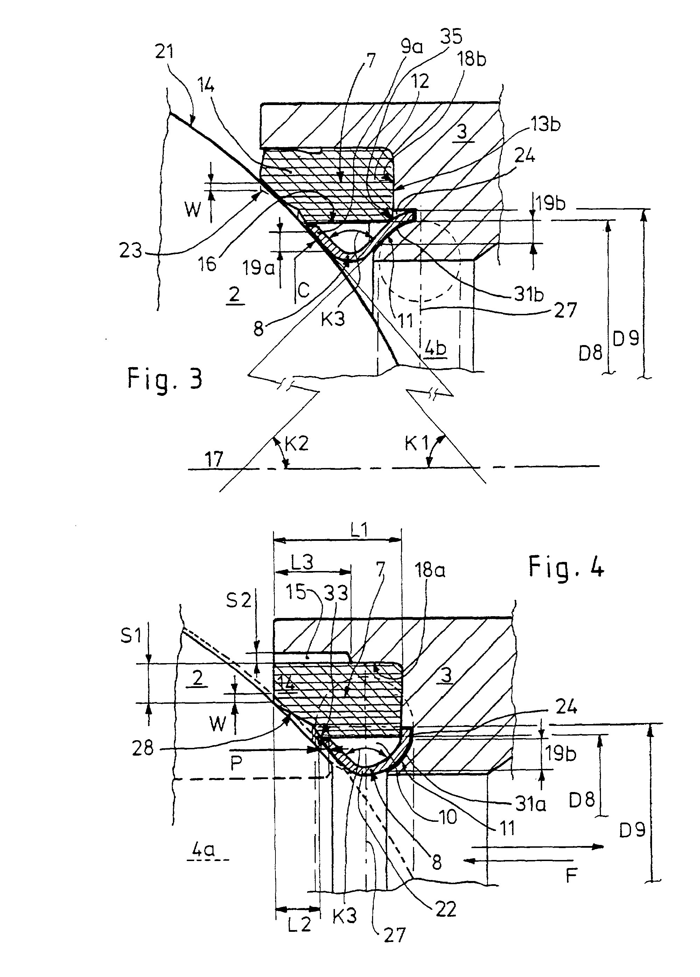

**Figure 3** is a detailed illustration of another preferred embodiment of the ball seal according to the invention, with the valve ball in its closed position after the assembly welding, seen in similar view as in figure 2.
**Figure 4** is a detailed illustration of a third preferred embodiment of the ball seal according to the invention, where the valve ball in its open position prior to the assembly welding is marked with a continuous line, and the valve ball in its closed position after the assembly welding is marked with a dotted line, seen in similar view as in figure 2.

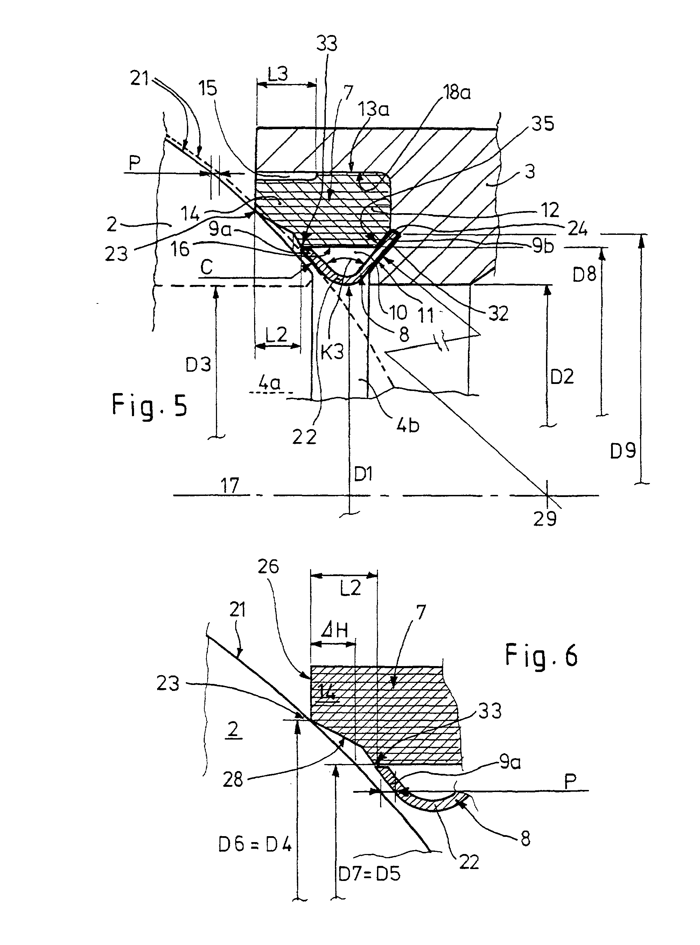

**Figure 5** is a detailed illustration of a fourth preferred embodiment of the ball seal according to the invention, where the valve ball in its open position prior to the assembly welding is marked with a continuous line, and the valve ball in its closed position after the assembly welding is marked with a dotted line, seen in similar view as in figure 2.
**Figure 6** is a schematical illustration of the measures of the parts of the ball seal according to the invention in relation to the valve ball, seen in principle in the same view as in figures 2 - 5.

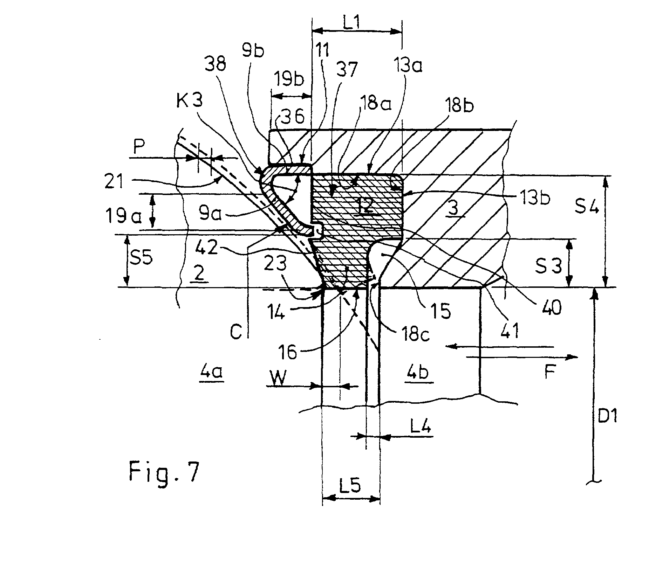

**Figure 7** is a detailed illustration of a fifth ball seal according to the invention, where the valve ball in its open position prior to the assembly welding is marked with a continuous line, and the valve ball in its closed position after the assembly welding is marked with a dotted line, seen in similar view as in figure 2.

In ball valves, of the type illustrated in figure 1, inside the valve chamber there is located a valve ball 2 which is normally turnable R for about 90°, which ball provides for the closed and open positions of the valve. In order to achieve tightness for the valve ball, in the closed position there are used two annular ball seals 1, which are supported on one hand against the surface of the valve ball 2, and on the other hand against the counterparts 3 that are located on the circumference of the inlet and outlet channels 4b and are attached in a stationary fashion with respect to the valve housing, i.e. the valve chamber 5. The valve ball 2 comprises a flow passage channel 4a, which in the open position of the valve is in the same line with the inlet and outlet channel 4b, thus allowing the medium to flow F via the ball valve. When the flow passage channel 4a of the valve ball is positioned transversally to the inlet and outlet channel 4b, the valve is in its closed position, thus preventing the medium from flowing F. In the assembly of the valve - when the assembly of the valve stem actuating the rotary motion R of the valve ball is ignored - the ball seals 1 are placed in their counterparts 3 located in the pipe fittings 20a and 20b, whereafter the pipe fittings are pushed through the holes provided at the opposite ends of the valve jacket 25, with the ball seals and the counterparts first, so far that both ball seals 1, one of which is located in the outlet channel 4b and the other in the inlet channel 4b, are supported against the outer surface 21 of the valve ball 2, on opposite sides and naturally against their counterparts. Thereafter the pipe fittings 20a, 20b are locked in place, while the ball seals 1 remain positioned against the outer surface of the valve ball, whereafter the valve jacket 25 and the pipe fittings are connected by welding, i.e. by making circular welds 6 that close the valve housing 5. Because now the elements keeping the valve together, i.e. the jacket 25, the pipe fittings 20a, 20b and the counterparts 3 form a uniform entity, said entity is here generally called the valve chamber 5. As is understandable, the welding shrinkage of the welds 6 results in that the distance H between the counterparts 3 located on opposite sides of the valve ball is reduced, i.e. the counterparts and the sealings are shifted closer to each other.

The ball seal according to the invention comprises a first ring made of some flexible, resilient or elastic material, i.e. a support ring 7, 37, and a resilient second ring made for example of metal and having a mainly V-shaped cross-section, i.e. a sealing ring 8, 38, which is located at least partly inside the support ring 7, as in figures 2 - 5, or somewhat towards the valve ball from the support ring 37, as in figure 7. Thus the ball seal 1 consists of two parts and is consequently a dual seal. The first branch 9a of the sealing ring 8, 38 with a normally V-shaped cross-section of the dual seal according to the invention, said first branch 9a being located on the side of the valve ball, moves in a deflecting fashion in the flowing direction F, and is particularly unobstructedly or freely movable, which means that its deflection against the compressive force coming from the valve ball 2 - which force is affective in the flowing direction F, and at the same time in the direction of the center line 17 - is not restricted by other means than the flexibility or rigidity of the sealing ring itself. For this purpose, the sealing ring 8, 38 has said V-shaped form, comprising a first branch 9a and a second branch 9b, both of which in some embodiments point away or outwards from the center line 17 of the inlet/outlet channel 4b, which center line 17 is normally, in the open position of the valve, congruent with the center line of the flow passage channel 4a provided in the ball, and in some other embodiments pointed away from the rotary axis line 50 of the valve ball 2. Said center line 17 passes via the central point of the valve ball 2, and both rings of the dual seal, i.e. the support ring 7, 37 and the sealing ring 8, 38 are symmetrical with respect to said center line 17. Owing to the movability of the first branch 9a, at least some part of the inner peripheral surface 16 of the support ring 7, i.e. the area at the outer edge of the branch 9a, is cylindrical as in figures 2 - 5, or alternatively at least some part of the end surface 40 of the support ring 37 pointing towards the valve ball is spaced apart from the outer edge of the first branch. The latter feature can also be realized by means of an annular groove 41 provided in the end surface of the support ring, as is illustrated in figure 7. Thus the first branch of the sealing ring is at least its the major parts freely resilient, i.e. the first branch 9a is not supported against the support ring 7, 37 to such extent that its deflecting motion owing to a pressure in the direction of the flow F or to a similar effect should be essentially reduced. Because the support ring is made of an elastic material, as shall be explained below, the deflecting motion of the first branch 9a of the sealing ring is not disturbed by its mere contact with such a surface of the sealing ring that is parallel or nearly parallel with said center line 17. This applies to all embodiments of the invention.

Said support ring 7, 37 includes a bottom part 12 with an outer peripheral surface 13a and a bottom surface 13b which is transversal to said center line. The support ring has dimensions such that said outer peripheral surface 13a thereof is supported against the first stop surface 18a of the counterpart 3 of the valve chamber 5, and the bottom surface 13b is supported against the second stop surface 18b of said counterpart. Said bottom surface 13b and its stop surface 18b can be planes perpendicular to the center line 17, or alternatively they can be spherical or conical surfaces with the center line 17 as their axis of symmetry, or combinations thereof. The outer peripheral surface 13a of the support ring and its stop surface 18a are typically at least partly cylindrical surfaces or the like. In that case the support ring 7, 37 fits well inside the stop surfaces 18a, 18b of the counterpart 3 and remains in place during the assembly of the valve prior to said assembly weldings. Moreover, the support ring 7, 37 includes an annular shoulder 14, pointing towards the valve ball and provided with a circular front edge 23 at the inner edge on the side of the valve ball. Thus the front edge 23 is formed either of the circular edge provided between the end surface 26 of the annular shoulder 14 and the inner surface 28 converging away from the valve ball 2, towards the inlet/outlet channel 4b, or alternatively of the circular edge provided between the inner peripheral surface 16 of the annular shoulder 14 and the inner surface 42 converging away from the valve ball 2, towards the inlet/outlet channel 4b. The inner surface 28, 42 converges towards the inner peripheral surface 16, and it is formed so that when pressing the support ring 7, 37 against the valve ball, the inner surface 28, 42 does not touch the outer surface 21 of the ball, but only the front edge 23 thereof gets into contact with the outer surface 21 of the valve. The thickness of the support ring 7, 37 in the direction perpendicular to the center line 17 and the length of said support ring in the direction of the center line 17 is such that the front edge 23 is located either at a distance L1 from the bottom surface 18b of the counterpart and at a thickness S1 from the side surface 18a of the counterpart, or at a distance L5 from the bottom surface 18c of the extension of the counterpart and at a thickness S4 from the side surface 18a of the counterpart. The length L2 and D3 of the annular shoulder 14, measured from the front edge 23 to the real or virtual contact point 33 of the first branch 9a of the sealing ring and with the inner peripheral surface 16 of the support ring is, for the magnitude of the clearance P, larger than the height ΔH of the calotte zone formed by the outer surface of the valve ball 2, which height is on the ball surface bordered by those concentric circles, the diameters D4, D5 whereof are equal to the diameter D6 of the front edge 23 and the diameter D7 of the contact point 33 of the first branch 9a of the sealing ring and the inner peripheral surface 16 of the support ring, i.e. D4 = D6, D5 = D7 and L2 = ΔH + P. Thus the situation in figure 7 is completely analogical with the situation in figure 6. Hence the total length L1 and thickness S1, S4 of the support ring have such dimensions, in relation to the length of the sealing ring 8, 38 and its location in the direction of the center line, that when the annular shoulder and the valve ball are in mutual contact, in between the outer surface 21 of the valve ball and the first branch 9a of the stationary, V-shaped sealing ring 8, 38, there is left said predetermined clearance P. The magnitude of said predetermined clearance P is at maximum equal to the magnitude of the shrinkage caused by the weld 6 closing the valve chamber, in the direction of said center line 17.

Further, either the support ring 7, 37 and/or the surrounding counterpart 3 is provided with an annular groove 15 extending along the whole peripheral length of the support ring 7, 37, i.e. the annular groove can be located in the support ring or in the counterpart or partly in both. In another embodiment, the annular groove 15 extends within the area of the external peripheral surface 13a, in which case it begins at the end surface 26 on the side of the valve ball, as is seen in figures 2 - 5. In another alternative, the annular groove 15 extends within the area of the bottom surface 13b, in which case it begins at the inner peripheral surface 16 located on the side of the inlet and/or outlet channel 4b, as is seen in figure 7. The depth S2 of the annular groove in perpendicular direction against the center line 17, or alternatively its length L4 in the direction of the center line 17 is at least equal to the deformation W caused in the annular shoulder of the support ring by the valve ball 2, which was shifted for the distance of said clearance P in the direction of the center line, said deformation being mainly deflection in a direction transversal to the center line. As for the length L3 of said annular groove 15 in the direction of the center line, it is at least equal to the length L2 of the annular shoulder, or alternatively the depth S3 of the annular groove in a direction perpendicular to the center line 17 is at least equal to the depth S5 of the annular shoulder. The length L2 of the annular shoulder 14 of the support ring, or the depth S5 thereof [= length in the direction transversal to the center line] is generally 20% - 60%, advantageously 30% - 50% of the total length L1 of the support ring 7, 37, in order to provide the support ring both with a sufficiently long annular shoulder 14 for said deformation W, and a sufficiently long bottom part 12 in order to keep the support ring in place against said surfaces 18a and 18b. As for the length L3 or depth S3 of the annular groove 15, it is at least equal to the length L2 of the annular shoulder, or respectively equal to the depth S5, but generally somewhat longer, for example 25% - 65%, advantageously 35% - 55% of the total length L1 of the support ring 7, 37 or of its total thickness S4, in order to ensure that problems do not arise in the deformation W. The depth S2 or length L4 of the annular groove 15 is typically 0.4% - 2%, advantageously 0.6% - 1.2% of the inner diameter D1 of the sealing ring, but it may deviate therefrom in case the predetermined clearance P deviates from what is currently considered as advantageous. According to the current understanding, the clearance P itself should be of the order 0.1% - 2.5% and advantageously 0.2% - 1.5% of the inner diameter D1 of the sealing ring 8, 38.

The bottom surface 13b of the support ring 7, as illustrated in figure 4, or the area of the peripheral edge 35 between the bottom surface and the inner peripheral surface 16, as is illustrated in figures 3 and 5, is in an assembled and welded valve pressed against the inner surface of the second branch 9b of the sealing ring, or alternatively the outer edge of the second branch 9b of the sealing ring 8 is in an assembled and welded valve pressed against the inner surface of the indentation 34 of the support ring, as is seen in figure 2, or against another such area of the support ring that is located in the vicinity of its bottom surface 13b. Said structure prevents leakage between the sealing ring 8 and the support ring 7 via the space 10 provided between the sealing ring branches 9a and 9b in a situation where the support ring 7 has for some reason been too flexible. In order to provide for the described effect, the inner diameter D8 of the support ring 7 at the bottom surface thereof must not be larger than the outer diameter D9 of the second branch 9b of the sealing ring 8. Otherwise the total thickness of the support ring 7, 37 in the direction of the diameter can be for instance 4% - 30%, advantageously 8% -16% of the inner diameter D1 of the sealing ring 8 or of the support ring 7, and the total length L1 of the support ring 7, 37 can be 10% - 40%, advantageously 14% - 20% of the inner diameter D1 of the sealing ring/support ring. However, these values should not be considered as restricting for the invention.

The above described outer ring or support ring 7, 37 of a dual seal is made of some flexible or elastic material that maintains its strength properties at least for the major part at the valve operating temperature, which means that the support ring material under a load yields at least mainly elastically. It would be preferable if the material of the support ring 7, 37 could at the operating temperature maintain such strength properties that it would have a maximum yield in the elastic area. However, with all materials part of the yield is plastic, and therefore a requirement set for the support ring must be that advantageously at least half of the yield is elastic and no more than half of it plastic, i.e. the support ring 7, 37 should, when the loading strength is removed, return to at least half of the original measures. According to current understanding, the material of the support ring 7, 37, should be more flexible or resilient than the material of the corresponding sealing ring 8, 38, an/or possibly it can also be maintained that the support ring is made of some softer material than the sealing ring. For example, the support ring is composed of some polymer material, i.e. plastic, with or without a filler material, and advantageously of polytetrafluoroethylene (PTFE). With said materials the aforementioned requirement of elasticity means that the operating temperature must be lower than the crystallization temperature or softening temperature of the employed polymer, although the possible filler material may affect the allowed operating temperature. Some other materials can also be used in the support ring, for instance graphite, carbon fibers, fullerins or metals as well as various composites. Naturally the operating conditions affect the choice of the material, and further research and development work may in the future bring new, feasible materials to the process. As for the material of the V-shaped sealing ring 8, 38, which will otherwise be dealt with in more detail below, it must be relatively rigid in comparison with the support ring, but still it must render some deflection, with the applied measures, for the sealing ring 8, 38, which deflection must be as elastic as possible, in which case the material often has a fairly high module of elasticity. Various metals and metal alloys can be used, but other materials are not excluded. Most often stainless steel or possibly so-called acid-proof steel are suitable materials for these structures.

Advantageously the outer edge of the first branch 9a of the sealing ring, or the circular extension of said outer edge, have dimensions to fit, with a very small tolerance, inside the inner peripheral surface 16 of the support ring when assembling the seal, in which case it may, after assembly welding, be in contact with said peripheral surface 16, but only so lightly that it is freely movable along said peripheral surface of the support ring, as is the case in the embodiments of figures 2 - 5. In the embodiments of figures 2 - 5, the outer edge of the first branch 9a is shaped to be a mainly outwardly directed cylindrical surface, which moves or slides easily and with a slight resistance or friction along the inner peripheral surface 16 of the support ring 7, 37, which surface at least at this spot is cylindrical, or mainly in the direction of said peripheral surface, so that the first branch 9a is not actually supported against the support ring. The reason for said motion is that the first branch 9a of the sealing ring, when deflecting, moves at least in the direction of the flow F, i.e. in the direction of the center line 17. Naturally the outer edge can also be rounded in shape, or it may be provided with a peripheral extension (not illustrated), which extension must not, however, get into contact with the outer surface 21 of the valve ball 2, neither before the assembly welding of the valve nor after it. In the embodiment of figure 7, the shape of the first branch 9a of the sealing ring 38 is of no importance, but it is preferable that it is located at a slight clearance from that side surface 40 of the support ring 37 that is located on the side of the valve ball 2, when said side surface is straight in a way that is not illustrated in the drawing, or when it is separated from the rest of the support ring 37 by a annular groove 41, in order to prevent the first branch 9a of the sealing ring from being supported against the support ring under any circumstances. The above description does not affect the fact that the linear, i.e. circular contact point C of said first branch 9a and the outer surface of the valve ball can be located as near to the outer edge of the first branch as possible. Said contact point C on the outer surface of the first branch 9a of the sealing ring is, however, different from that point of the surface of the first branch that moves opposite to the inner peripheral surface 16 of the support ring and is possibly in contact therewith, although said points of the surface can be adjacent surface areas.

At least a first section 19a of the width of the first branch 9a of the sealing ring is at such an angle K1 with respect to the center line 17 that the outer surface of the first branch 9a is tangential to the outer surface 21 of the valve ball 2, thus forming their mutual peripherally directed line contact C. Said line contact C constitutes the primary sealing point between the valve ball 2 and the dual seal, i.e. the ball seal 1. Said second branch 9b of the sealing ring 8, 38 is at such an angle K2 with respect to the center line 17 that another section 19b of the outer surface of the branch 9b is supported against a surface 11 of said counterpart 3, which surface is pointed towards the valve ball, so that said angle can be for example 60° - 120°, which means a countersurface 11 transversal to the center line 17, or alternatively -30° +30°, which means a countersurface 11 mainly parallel to the center line, as is the case in figure 7. In addition, any outer edge of the second branch 9b of the sealing ring 8 or 38 can be arranged to be placed in an annular groove 24 located in the counterpart 3, in the area of the countersurface 13b thereof, as is the case in figures 3, 4 and 5. The purpose of the second section 19b of the second branch 9b of the V-shaped sealing ring 8, 38, and of its countersurface 11, with a shape corresponding to the shape of the second section, as well as the purpose of the annular groove 24 of the counterpart, is to lock the sealing ring immovably in the counterpart 3, so that it remains exactly in place.

In the border areas of the inlet/outlet channel 4b, in front of said counterpart 3, said countersurface 11 can be for instance a male frustoconical countersurface 30, with the tip pointed towards the valve ball 2. The outer surface of the second section 19b of the second branch of the sealing ring is naturally shaped in a corresponding fashion, as is shown in figure 2. As an alternative, said countersurface 11 can be a toroidal countersurface 31a or 31b, with the central plane 27 located either on the valve ball side with respect to said countersurface 11, as is the case in figure 4, or on the side of the inlet/outlet channel 4b, as is the case in figure 3. Naturally the outer surface of the second section 19b of the sealing ring is shaped in a corresponding fashion. Further, said countersurface 11 can alternatively be a spherical countersurface 32, with the center point 29 located on the side of said inlet/outlet channel 4b with respect to said countersurface 11, as is illustrated in figure 5, in which case the second section 19b of the sealing ring again is shaped in a corresponding fashion. Moreover, said countersurface 11 can alternatively be a cylindrical surface 36, in which case the outer surface of the second section 19b of the sealing ring is shaped in a corresponding fashion. Thus the outer surface of the second branch 9b of the sealing ring can in cross-section be at least partly either straight or convex or concave in order to make contact with the surface section 11 of the counterpart 3. In the drawings, the first branch 9a and particularly its first section 19a are mainly straight in cross-section, thus constituting part of a straight cone surface, i.e. frustoconical. However, within the scope of the invention, the first branch 9a and particularly its first section 19a can be shaped to be concave in cross-section, i.e. to constitute part of a ball calotte, i.e. a frustrated ball calotte, in which case it is pointed out that the radius of said virtual ball must be essentially larger than the radius of the valve ball; or it can be shaped to be convex in cross-section, i.e. to constitute part of a toroidal surface, in analogy with the surface 31a illustrated in figure 4. Thus the outer surface of the first branch 9a of the sealing ring may in cross-section be at least partly either straight or concave or convex in order to make a line contact C against the outer surface 21 of the valve ball 2.

The angle K3 between the first branch 9a and the second branch 9b of said V-shaped sealing ring 8, 38 is in average at least 20°, but no more than 120°, advantageously at least 45° or no more than 90°. Average here means the angle created by the average direction of the possibly curved branch 9a and/or 9b, in relation to another direction defined in a corresponding fashion. Often the average directions of the branches 9a, 9b are roughly equal to the directions of the first and second sections 19a, 19b of the branches. Said angle is, however, also affected by the fact how far from the center line 17 the sealing, peripheral line contact C between the sealing ring and the valve ball is at any particular time. The angle K3 between the branches, and the above described angles K1 and K2 between the branches and the center line, affect each other. The tip section 22 connecting the branches 9a and 9b of the V-shaped sealing ring 8, 38 is curved in cross-section and constitutes the smallest inner diameter D1 of the dual seal, said diameter D1 being essentially equal to the diameter D2, D3 of the inlet/outlet channel 4b and/or of the flow passage channel 4a, or at least very near to said diameters D2, D3. The space 10 between the branches 9a, 9b is mainly empty space, i.e. it is not filled with a solid substance, at least not to any essential degree. The reason for this is that the first branch 9a must, according to the invention, be allowed to be deflected, which takes place at least along the length of the first branch of the sealing ring and along the tip section 22 between the branches, and possibly also along some section of the length of the second branch 9b. At least the first branch 9a and the tip section 22 are spaced apart from the support ring in order to provide for the deflection of the support ring according to the invention. The material thickness of the sealing ring 8, 38 can be 1% - 6%, advantageously 2% - 3% of the inner diameter D1 of the sealing/support ring, but said thickness is essentially affected by the employed material and its module of elasticity, as well as the pressure under which the valve is meant to be used. Thus the sealing ring 8, 38 is elastically springy owing to the forces prevailing in the valve in the direction of the center line. Along the length of the branches 9a, 9b of the sealing ring 8, 38 and along the length of the tip section 22 connecting said branches the material thickness can be essentially the same, as is the case in the drawings, but it may also be different at the different spots of the sealing ring.

When a valve provided with the dual seal according to the invention is assembled, in the first step the valve ball 2 is supported against the annular shoulder 14 of the support ring 7, 37, as is marked with a continuous line in figures 2 and 4 - 6. Now said assembled parts of the valve can be kept in place by pressing the pipe fittings 20a and 20b towards each other, so that the positioning of said parts and their fitting in place is carried out precisely. Thereafter the valve chamber 5 is closed by closing welds 6, which causes welding shrinkage, thus reducing the interval H between opposite seals and their counterparts 3. After closing the valve by welding, both counterparts 3 have shifted towards each other for the length of the welding shrinkage, i.e. towards the valve ball, and simultaneously the annular shoulder 14 of the support ring 7, 37 has yielded, due to the force created by the welding shrinkage, and experienced a deformation W in the radial direction, outwardly from the center line 17. Said deformation W is made possible by the annular groove 15, because the annular shoulder is now pressed in the space offered by said groove, as is illustrated in figure 3. The annular shoulder 14 may get in contact with the wall of the annular groove 15, but excessive contact is harmful, because it increases the force R required for turning the valve ball 2. Thus the depth S2 or length L5 of the annular groove 15 must generally be at least equal to the deformation W caused by the elimination of the clearance P during the assembly of the valve, i.e. equal to the deflection in the direction perpendicular to the center line. It is essential that said deformation W of the support ring takes place in such a part of the support ring, in this case in the annular shoulder 14, that is not in contact with the sealing ring 8, 38, but constitutes a part of the support ring that is independent of the sealing ring, i.e. the deformed section of the support ring is not in contact with the sealing ring. Under a relatively high pressure, i.e. near to the designed maximum pressure of the valve, the valve ball 2 gets into pressure contact with the metallic, V-shaped sealing ring 8, 38, as is marked with a continuous line in figure 3. Simultaneously the valve ball 2 still presses the support ring 7, 37, which still has maintained its elastic properties, and is thus urged against the stop surfaces 18a and 18b of the counterpart, which results in an effective rear tightness for the ball seal 1. Consequently, both the sealing ring 8, 38 and the support ring 7, 37 direct to the valve ball only a moderate force that enables the turning R of said ball owing to the influence of the liquid pressure prevailing in the inlet/outlet channels 4b, but a force that still provides for the creation of sealing. It is particularly pointed out that the support ring 7, 37 also participates in the creation of the sealing. In the closed position of the valve, the pressure of the fluid on the upstream side of the valve ball 2 increases said force, simultaneously increasing the sealing effect of the ball seal as the sealing ring 8, 38 maintains its deflection possibilities, so that the opening of the valve also is performed without problems. The rotation R of the valve ball for closing and opening the valve is, due to the flexibility of the V-ring, always possible, and always reliable owing to the combined effect of the sealing ring 8, 38 and the support ring 7, 37 of the valve ball. It is our belief that the structure according to figures 2 - 5 is particularly advantageous both owing to its assembly and to the following effect. When liquid pressure is directed to a closed valve, said pressure is naturally directed to the valve ball, but also past its outer surfaces, directly to the dual seal. In the embodiments of figures 2 - 5, said by-pass pressure tends to urge the annular shoulder 14 against the valve ball 2, whereas in the embodiment of figure 7 said by-pass pressure tends to separate the annular shoulder from the valve ball. The difference in effect is not large in comparison with the force created by the valve ball 2 in the flowing direction F, but in borderline cases it might be important.

## Claims

1. A ball valve with a dual seal, comprising
- a valve chamber (5), a valve ball (2) turnable therein and an inlet channel and an outlet channel (4b) for a fluid, said valve chamber being closed by welds (6);
- in the valve ball a flow passage channel (4a) for the fluid;
- between the valve chamber and the valve ball, around the inlet and/or outlet channel (4b), a dual seal (1) supported against the stop surfaces (18a, 18b) of the counterparts (3) of the valve chamber, said dual seal (1) consisting of an outer or towards the inlet/outlet channel locating first ring (7, 37) made of an elastic material, and of a metallic, in cross-section mainly V-shaped, resilient second ring (8, 38), which is located respectively internally with respect to the first ring or on the side of the valve ball, **characterized in that** said first ring is a support ring (7, 37) comprising a bottom part (12) supported directly against the stop surfaces (18a, resp. 18b) of the counterpart, and an annular shoulder (14) pointed towards the valve ball therefrom; that said annular shoulder (14) is separated from the counterpart (3) by an annular groove (15); and that said second ring with said mainly V-shaped cross-section, is a sealing ring (8, 38) with a second branch (9b) that is supported in a stationary fashion against the counterparts (3) and a first branch (9a) that is located on the side of the valve ball and has substantially unobstructed (L1; S4) resilience with respect to the support ring (7, 37).

2. A ball valve with a dual seal according to claim 1, **characterized in that** the bottom part (12) of the support ring (7, 37) is defined by an external peripheral surface (13a) and a bottom surface (13b) transversal to the center line; and that the annular groove (15) is located either in the counterpart (3) and/or in the support ring (7, 37) and extends within the area of the external peripheral surface (13a) of the support ring, starting from the end surface (26) on the side of the valve ball; or within the area of the bottom surface (13b), starting from the inner peripheral surface (16) on the side of the inlet and/or outlet channel (4b).

3. A ball valve with a dual seal according to claim 1 or 2, **characterized in that** in the support ring, a front edge (23), prior to closing the valve chamber with welds (6), is located at such a distance (L1; L5) from the bottom surface (18b, 18c) of the counterpart or of an extension thereof, and from the side surface (18a) of the counterpart at such a thickness (S1, S4), that when the front edge (23) of the annular shoulder and the valve ball are in mutual contact, a predetermined clearance (P) is left between the outer surface (21) of the valve ball and the first branch (9a) of the V-shaped sealing ring (8, 38).

4. A ball valve with a dual seal according to claim 3, **characterized in that** the size of the predetermined clearance (P) is at maximum equal to the shrinkage caused by the weld (6) closing the valve chamber in the direction of said center line (17); and that the depth (S2) or length (L4) of the annular groove (15) is at least equal to the deformation (W) of the annular shoulder of the support ring, caused by the valve ball (2) as shifted for the length of said clearance (P), said deformation taking place transversally to the center line or respectively in parallel with the center line.

5. A ball valve with a dual seal according to claim 1, **characterized in that** at least one section (19a) of the width of said first branch (9a) is at such an angle (K1) with respect to the center line that the outer surface of the first branch (9a) is tangential to the outer surface of the valve ball (2), thus providing their mutual peripheral line contact (C); and that said second branch (9b) of the sealing ring (8, 38) is at such an angle (K2) that one section (19b) of the outer surface of the branch (9b) is supported against a surface (11) of said counterpart (3) that points towards the valve ball.

6. A ball valve with a dual seal according to claim 1, **characterized in that** said counterpart (3) comprises, at the area of second branch (9b) of the sealing ring, a surface section (11) which is either:
- a male frustoconical countersurface (30), with a tip pointing towards the valve ball (2); or
- a toroidal countersurface (31a, 31b) with a middle level (27) located either on the valve ball side in relation to said surface section (11), or on the inlet/outlet channel (4b) side in relation thereto; or
- a spherical countersurface (32) with the center point (29) located, in relation to said surface section (11), on the side of said inlet or outlet channel (4b); or
- a cylindrical surface (36) parallel to the inlet/outlet channel (4b).

7. A ball valve with a dual seal according to claim 1 or 6, **characterized in that** the angle (K3) between the branches (9a and 9b) of said V-shaped sealing ring (8, 38) is in average at least 20° or at most 120°, or at least 45°, or at most 90°; that in cross-section, the outer surface of the second branch (9b) of the sealing ring is at least partly either straight or concave or convex in order to make contact with the surface section (11) of the counterpart (3), and that in cross-section, the outer surface of the first branch (9a) of the sealing ring is at least partly either straight or concave or convex in order to make contact with the outer surface (21) of the valve ball (2); and that the tip section (22) connecting the branches (9a and 9b) of the V-shaped sealing ring (8, 38) is curved in cross-section.

8. A ball valve with a dual seal according to any of the preceding claims, **characterized in that** the bottom surface (13b) of the support ring (7, 37) has also a form to be supported against the outer end of the second branch (9b) of the V-shaped sealing ring (8, 38) and/or that the outer end of the second branch (9b) of the V-shaped sealing ring (8, 38) has also a form to be supported against the support ring (7, 37) adjacent to its bottom surface (13b).

9. A ball valve with a dual seal according to any of the preceding claims, **characterized in that** the space (10) between the branches (9a, 9b) of said V-shaped sealing ring (8, 38) is mainly free space in order to achieve said unobstructed resilience of the first branch (9a); and that the material thickness of the sealing ring (8, 38) is 1 % - 6%, preferably 2% - 3% of the inner diameter (D1) of the sealing ring; that the length (L2) or depth (S5) of the annular shoulder (14) of the support ring is 20% - 60%, preferably 30% - 50% of the total length (L1) or total thickness (S4) of the support ring (7, 37); and that the length (L3) or depth (S3) of said annular groove (15) is at least equal to the length (L2) or respectively the depth (S5) of the annular shoulder.

10. A ball valve with a dual seal according to any of the preceding claims, **characterized in that** the outer ring (7, 37) is made of a material that is essentially elastic at the valve operating temperature; that the outer ring is made of a polymer material with or without a filler, preferably of polytetrafluoroethylene; and that the V-shaped sealing ring (8, 38) is made of stainless steel.

## Patentansprüche

1. Kugelventil mit Doppeldichtung, umfassend:
- eine Ventilkammer (5), eine darin drehbare Ventilkugel, und einen Einlaßkanal und einen Auslaßkanal (4b) für ein Fluid, wobei die Ventilkammer durch Schweißnähte verschlossen ist;
- einen in der Ventilkugel befindlichen Strömungs-Durchlaßkanal (4a) für das Fluid;
- zwischen der Ventilkammer und der Ventilkugel und um den Einlaß- und/oder den Auslaßkanal (4b) herum, eine Doppeldichtung (1), die gegen die Anschlagflächen (18a, 18b) der Gegenstücke (3) der Ventilkammer gelagert sind, wobei die Doppeldichtung (1) aus einem äußeren oder in Richtung des Einlaß/Auslaß-Kanals gerichteten Ring (7, 37) aus einem elastischen Werkstoff und einem metallischen, im Querschnitt vornehmlich V-förmigen nachgiebigen zweiten Ring (8, 38), der innen bezüglich des ersten Rings oder auf der Seite der Ventilkugel angeordnet ist, besteht, **dadurch gekennzeichnet, daß** der erste Ring ein Haltering (7, 37) ist, umfassend einen Bodenteil (12), der direkt an den Anschlagflächen (18a bzw. 18b) des Gegenstücks anliegt, und eine ringförmige Schulter (14), die von dort aus in Richtung der Ventilkugel weist, daß die ringförmige Schulter (14) von dem Gegenstück (3) durch eine Ringnut (15) getrennt ist; und daß der zweite Ring mit dem vornehmlich V-förmigen Querschnitt ein Dichtungsring (8, 38) mit einem zweiten Schenkel (9b) ist, der in stationärer Weise an den Gegenstücken (3) anliegt, und mit einem ersten Schenkel (9a), der sich auf der Seite der Ventilkugel befindet und eine im wesentlichen ungehinderte Nachgiebigkeit (L1; S4) in Bezug auf den Haltering (7, 37) besitzt.

2. Kugelventil mit Doppeldichtung nach Anspruch 1, **dadurch gekennzeichnet, daß** der Bodenteil (12) des Halterings (7, 37) definiert ist durch eine äußere Umfangsfläche (13a) und eine Bodenfläche (13b) quer zu der Mittellinie, und daß die Ringnut (15) in dem Gegenstück (3) und/oder in dem Haltering (7, 37) gelegen ist und sich innerhalb des Bereichs der äußeren Umfangsfläche (13a) des Halterings erstreckt, beginnend an der Stirnfläche (26) auf der Seite der Ventilkugel; oder sich innerhalb des Bereichs der Bodenfläche (13b) erstreckt, beginnend an der inneren Umfangsfläche (16) auf der Seite des Einlaß- und/oder Auslaßkanals (4b).

3. Kugelventil mit Doppeldichtung nach Anspruch 1 oder 2, **dadurch gekennzeichnet, daß** in dem Haltering vor dem Verschließen der Ventilkammer durch Schweißnähte (6) eine Vorderkante (23) auf einen derartigen Abstand (L1; L5) von der Bodenfläche (18b, 18c) des Gegenstücks oder einer Verlängerung davon und von der Seitenfläche (18a) des Gegenstücks bei einer solchen Dicke (S1, S4) gebracht wird, daß, wenn die Vorderkante (23) der ringförmigen Schulter und die Ventilkugel in Berührung stehen, ein vorbestimmter Spielraum (P) zwischen der Außenfläche (21) der Ventilkugel und dem ersten Schenkel (9a) des V-förmigen Dichtungsrings (8, 38) verbleibt.

4. Kugelventil mit Doppeldichtung nach Anspruch 3, **dadurch gekennzeichnet, daß** die Größe des vorbestimmten Spielraums (P) maximal so groß ist wie die Schrumpfung, die verursacht wird durch die die Ventilkammer in Richtung der Mittellinie (17) verschließende Schweißnaht (6), und daß die Tiefe (S2) oder die Länge (L4) der Ringnut (15) mindestens so groß ist wie die Verformung (W) der ringförmigen Schulter des Halterings, die verursacht wird durch die Ventilkugel (2), die über die Länge des Spielraums (P) verschoben wird, wobei die Verformung quer zu der Mittellinie oder parallel zu der Mittellinie stattfindet.

5. Kugelventil mit Doppeldichtung nach Anspruch 1, **dadurch gekennzeichnet, daß** mindestens ein Abschnitt (19a) der Breite des ersten Schenkels (9a) einen derartigen Winkel (K1) bezüglich der Mittellinie aufweist, daß die Außenfläche des ersten Schenkels (9a) tangential verläuft zu der Außenfläche der Ventilkugel (2), um dadurch deren gegenseitigen Umfangs-Linienkontakt (C) zu bilden, und daß der zweite Schenkel (9b) des Dichtungsrings (8, 38) einen derartigen Winkel (K2) einnimmt, daß ein Abschnitt (19b) der Außenfläche des Schenkels (9b) an einer Oberfläche (11) des Gegenstücks (3) abgestützt wird, die in Richtung auf die Ventilkugel weist.

6. Kugelventil mit Doppeldichtung nach Anspruch 1, **dadurch gekennzeichnet, daß** das Gegenstück (3) in dem Bereich des zweiten Schenkels (9b) des Dichtungsrings einen Oberflächenabschnitt (11) besitzt, bei der es sich um eine der folgenden Alternativen handelt:
- eine konvexe kegelstumpfförmige Gegenfläche (30) mit einer Spitze, die in Richtung der Ventilkugel (2) weist; oder
- eine torusförmige Gegenfläche (31a, 31b) mit einem mittleren Niveau (27) auf der Ventilkugelseite bezüglich des Oberflächenabschnitts (11) oder auf der Seite des Einlaß-/Auslaß-Kanals (4b) in Bezug auf den Oberflächenabschnitt; oder
- eine sphärische Gegenfläche (32) mit dem Mittelpunkt (29) in Bezug auf den Oberflächenabschnitt (11) auf der Seite des Einlaß- oder Auslaßkanals (4b) gelegen; oder
- eine zylindrische Oberfläche (36) parallel zu dem Einlaß-/Auslaß-Kanal (4b).

7. Kugelventil mit Doppeldichtung nach Anspruch 1 oder 6, **dadurch gekennzeichnet, daß** der Winkel (K3) zwischen den Schenkelen (9a und 9b) des V-förmigen Dichtungsrings (8, 38) im Durchschnitt mindestens 20° oder höchstens 120° oder mindestens 45° oder höchstens 90° beträgt, daß die Außenfläche des zweiten Schenkels (9b) des Dichtungsrings im Querschnitt zumindest teilweise entweder geradlinig oder konkav oder konvex ist, um in Berührung zu treten mit dem Oberflächenabschnitt (7) des Gegenstücks (3), und daß die Außenoberfläche des ersten Schenkels (9a) des Dichtungsrings im Querschnitt zumindest teilweise geradlinig oder konkav oder konvex ist, um in Berührung zu treten mit der Außenoberfläche (21) der Ventilkugel (2); und daß der die Schenkele (9a und 9b) verbindende Spitzenabschnitt (22) des V-förmigen Dichtungsrings (8, 38) einen gekrümmten Querschnitt besitzt.

8. Kugelventil mit Doppeldichtung nach einem der vorhergehenden Ansprüche, **dadurch gekennzeichnet, daß** die Bodenfläche (13b) des Halterings (7, 37) ebenfalls eine Form besitzt, die an dem äußeren Ende des zweiten Schenkels (9b) des V-förmigen Dichtungsrings (8, 38) gehalten wird, und/oder daß das äußere Ende des zweiten Schenkels (9b) des V-förmigen Dichtungsrings (8, 38) ebenfalls eine Form hat, die an dem Haltering (7, 37) benachbart zu seiner Bodenfläche gehalten wird.

9. Kugelventil mit Doppeldichtung nach einem der vorhergehenden Ansprüche, **dadurch gekennzeichnet, daß** der Raum (10) zwischen den Schenkeln (9a, 9b) des V-förmigen Dichtungsrings (8, 38) ein vornehmlich freier Raum ist, um die ungehinderte Nachgiebigkeit des ersten Schenkels (9a) zu erreichen, und daß die Materialstärke des Dichtungsrings (8, 38) 1% bis 6%, vorzugsweise 2% bis 3% des Innendurchmessers (D1) des Dichtungsrings ausmacht, daß die Länge (L2) oder die Tiefe (S5) der ringförmigen Schulter (14) des Halterings 20% bis 60°, vorzugsweise 30% bis 50% der Gesamtlänge (L1) oder der Gesamtdicke (S4) des Halterings (7, 37) ausmacht, und daß die Länge (L3) oder die Tiefe (S3) der Ringnut (15) mindestens gleich groß ist wie die Länge (L2) bzw. die Tiefe (S5) der ringförmigen Schulter.

10. Kugelventil mit Doppeldichtung nach einem der vorhergehenden Ansprüche, **dadurch gekennzeichnet, daß** der äußere Ring (7, 37) aus einem Material besteht, das bei der Ventil-Betriebstemperatur im wesentlichen elastisch ist, daß der äußere Ring aus einem Polymermaterial mit oder ohne Füllstoff besteht, vorzugsweise aus Polytetrafluorethylen, und daß der V-förmige Dichtungsring (8, 38) aus Edelstahl besteht.

## Revendications

1. Robinet à tournant sphérique comportant un joint d'étanchéité double, comprenant :
- une chambre de robinet (5), un tournant sphérique de robinet (2) capable de tourner dans celle-ci et un canal d'entrée et un canal de sortie (4b) pour un fluide, ladite chambre de robinet étant fermée par des soudures (6) ;
- dans le tournant sphérique de robinet, un canal de passage d'écoulement (4a) pour le fluide ;
- entre la chambre de robinet et le tournant sphérique de robinet, autour du canal d'entrée et/ou de sortie (4b), un joint d'étanchéité double (1) supporté contre les surfaces d'arrêt (18a, 18b) des contreparties (3) de la chambre de robinet, ledit joint d'étanchéité double (1) consistant en une première bague extérieure ou située vers le canal d'entrée/sortie (7, 37) réalisée en un matériau élastique, et en une deuxième bague élastique, de section principalement en V, métallique (8, 38), qui est située respectivement intérieurement par rapport à la première bague ou du côté du tournant sphérique de robinet, **caractérisé en ce que** ladite première bague est une bague de support (7, 37) comprenant une partie inférieure (12) supportée directement contre les surfaces d'arrêt (18a, respectivement 18b) de la contrepartie, et un épaulement annulaire (14) orienté vers le tournant sphérique de robinet à partir de celle-ci, **en ce que** ledit épaulement annulaire (14) est séparé de la contrepartie (3) par une gorge annulaire (15), et **en ce que** ladite deuxième bague, avec ladite section principalement en V, est une bague d'étanchéité (8, 38) avec une deuxième branche (9b) qui est supportée d'une manière immobile contre les contreparties (3) et une première branche (9a) qui est située du côté du tournant sphérique de robinet et qui présente une élasticité sensiblement libre (L1 ; S4) par rapport à la bague de support (7, 37).

2. Robinet à tournant sphérique comportant un joint d'étanchéité double selon la revendication 1, **caractérisé en ce que** la partie inférieure (12) de la bague de support (7, 37) est définie par une surface périphérique externe (13a) et une surface inférieure (13b) transversale à la ligne médiane, et **en ce que** la gorge annulaire (15) est située dans la contrepartie (3) et/ou dans la bague de support (7, 37) et s'étend dans la région de la surface périphérique externe (13a) de la bague de support, à partir de la surface d'extrémité (26) du côté du tournant sphérique de robinet, ou dans la région de la surface inférieure (13b), en commençant par la surface périphérique intérieure (16) du côté du canal d'entrée et/ou de sortie (4b).

3. Robinet à tournant sphérique comportant un joint d'étanchéité double selon la revendication 1 ou 2, **caractérisé en ce que**, dans la bague de support, un bord avant (23), avant la fermeture de la chambre de robinet par des soudures (6), est situé à une distance (L1 ; L5) de la surface inférieure (18b, 18c) de la contrepartie ou d'une extension de celle-ci telle, et de la surface latérale (18a) de la contrepartie à une épaisseur (SI, S4) telle, que, lorsque le bord avant (23) de l'épaulement annulaire et le tournant sphérique de robinet sont en contact mutuel, un jeu prédéterminé (P) est laissé entre la surface extérieure (21) du tournant sphérique de robinet et la première branche (9a) de la bague d'étanchéité en V (8, 38).

4. Robinet à tournant sphérique comportant un joint d'étanchéité double selon la revendication 3, **caractérisé en ce que** la dimension du jeu prédéterminé (P) est au maximum égale au retrait provoqué par la soudure (6) fermant la chambre de robinet dans la direction de ladite ligne médiane (17), et **en ce que** la profondeur (S2) ou la longueur (L4) de la gorge annulaire (15) est au moins égale à la déformation (W) de l'épaulement annulaire de la bague de support, provoquée par le tournant sphérique de robinet (2) alors qu'elle est décalée sur la longueur dudit jeu (P), ladite déformation ayant lieu transversalement à la ligne médiane ou respectivement parallèlement à la ligne médiane.

5. Robinet à tournant sphérique comportant un joint d'étanchéité double selon la revendication 1, **caractérisé en ce qu'**au moins une section (19a) de la largeur de ladite première branche (9a) forme un angle (K1) avec la ligne médiane tel que la surface extérieure de la première branche (9a) est tangentielle à la surface extérieure du tournant sphérique de robinet (2), assurant ainsi leur contact linéaire périphérique mutuel (C), et **en ce que** ladite deuxième branche (9b) de la bague d'étanchéité (8, 38) forme un angle (K2) tel qu'une section (19b) de la surface extérieure de la branche (9b) est supportée contre une surface (11) de ladite contrepartie (3) orientée vers le tournant sphérique de robinet.

6. Robinet à tournant sphérique comportant un joint d'étanchéité double selon la revendication 1, **caractérisé en ce que** ladite contrepartie. (3) comprend, au niveau de la région de la deuxième branche (9b) de la bague d'étanchéité, une section de surface (11) qui est soit :
- une contre-surface conique mâle (30), avec une pointe orientée vers le tournant sphérique de robinet (2) ; soit
- une contre-surface toroïdale (31a, 31b) avec un niveau intermédiaire (27) situé soit du côté du tournant sphérique de robinet par rapport à ladite section de surface (11), soit du côté de canal d'entrée/sortie (4b) par rapport à celle-ci ; soit
- une contre-surface sphérique (32) avec le point central (29) situé, par rapport à ladite section de surface (11), du côté dudit canal d'entrée ou de sortie (4b) ; soit
- une surface cylindrique (36) parallèle au canal d'entrée/sortie (4b).

7. Robinet à tournant sphérique comportant un joint d'étanchéité double selon la revendication 1 ou 6, **caractérisé en ce que** l'angle (K3) entre les branches (9a et 9b) de ladite bague d'étanchéité en V (8, 38) est en moyenne d'au moins 20° ou au plus de 120°, ou au moins de 45°, ou au plus de 90°, **en ce que**, en coupe, la surface extérieure de la deuxième branche (9b) de la bague d'étanchéité est au moins partiellement soit droite, soit concave, soit convexe, afin d'être en contact avec la section de surface (11) de la contrepartie (3), et **en ce que**, en coupe, la surface extérieure de la première branche (9a) de la bague d'étanchéité est au moins partiellement soit droite, soit concave, soit convexe, afin d'être un contact avec la surface extérieure (21) du tournant sphérique de robinet (2), et **en ce que** la section de pointe (22) reliant les branches (9a et 9b) de la bague d'étanchéité en V (8, 38) est incurvée en coupe.

8. Robinet à tournant sphérique comportant un joint d'étanchéité double selon l'une quelconque des revendications précédentes, **caractérisé en ce que** la surface inférieure (13b) de la bague de support (7, 37) a également une forme pour être supportée contre l'extrémité extérieure de la deuxième branche (9b) de la bague d'étanchéité en V (8, 38), et/ou **en ce que** l'extrémité extérieure de la deuxième branche (9b) de la bague d'étanchéité en V (8, 38) a également une forme pour être supportée contre la bague de support (7, 38) adjacente à sa surface inférieure (13b).

9. Robinet à tournant sphérique comportant un joint d'étanchéité double selon l'une quelconque des revendications précédentes, **caractérisé en ce que** l'espace (10) entre les branches (9a, 9b) de ladite bague d'étanchéité en V (8, 38) est principalement un espace libre afin d'obtenir ladite élasticité libre de la première branche (9a), et **en ce que** l'épaisseur du matériau de la bague d'étanchéité (8, 38) correspond à 1 % à 6 %, de préférence 2 % à 3 % du diamètre intérieur (D1) de la bague d'étanchéité, **en ce que** la longueur (L2) ou l'épaisseur (S5) de l'épaulement annulaire (14) de la bague de support correspond à 20 % à 60 %, de préférence 30 % à 50 % de la longueur totale (L1) ou de l'épaisseur totale (S4) de la bague de support (7, 37), et **en ce que** la longueur (L3) ou la profondeur (S3) de ladite gorge annulaire (15) est au moins égale à la longueur (L2) ou respectivement la hauteur (S5) de l'épaulement annulaire.

10. Robinet à tournant sphérique comportant un joint d'étanchéité double selon l'une quelconque des revendications précédentes, **caractérisé en ce que** la bague extérieure (7, 37) est réalisée en un matériau qui est essentiellement élastique à la température de fonctionnement du robinet, **en ce que** la bague extérieure est réalisée en un matériau polymère avec ou sans agent de remplissage, de préférence en polytétrafluoroéthylène, et **en ce que** la bague d'étanchéité en V (8, 38) est réalisée en acier inoxydable.
